# EUROPEAN PATENT SPECIFICATION

(11) **EP 3 274 180 B1**
(45) Date of publication and mention of the grant of the patent: **22.04.2020**
(21) Application number: 15900547.9
(22) Date of filing: 31.07.2015
(51) Int. Cl.: B41J 2/175, B41J 29/00, B41J 29/02, B41J 29/393, B41J 2/165, B41J 29/38, F16H 55/26, F16H 19/04

(54) **PRINTER GEAR ARRANGEMENT**
GETRIEBEANORDNUNG FÜR DRUCKER
AGENCEMENT D'ENGRENAGE D'IMPRIMANTE

(43) Date of publication of application: 31.01.2018
(73) Proprietor: Hewlett-Packard Development Company, L.P., Spring TX 77389 (US)
(72) Inventor: O'HARA, Steve, A., Vancouver, WA 98683 (US); SOSNOWSKI, Luke, P., Vancouver, WA 98683 (US); MARTIN, Scott, Vancouver, WA 98683 (US)
(74) Representative: EIP
(86) International application number: PCT/US2015/043286
(87) International publication number: WO 2017/023279

(56) References cited:
- EP-B1- 0 641 910
- JP-A- H03 293 177
- KR-A- 20090 037 518
- US-A- 5 971 520
- US-A- 6 134 986
- US-A1- 2005 179 713
- US-A1- 2009 174 748
- US-A1- 2011 074 874
- US-A1- 2014 022 324

## Description

### Background

A printer, including, for example, an inkjet print, a laser printer, a 3-D printer, or other type of printer, may include a printhead and a service station to service or maintain functionality of the printhead. Operation of the service station may include relative motion between the service station and the printhead.

US 2011/074874 A1 discloses a rack comprising a plurality of teeth having a first width and an adjacent plurality of teeth having a second smaller teeth, the first plurality of teeth having adjacent toothless portions providing a position for an unmeshed pinion to be held when meshing of the rack and pinion is not required. KR 2009 0037518 discloses an arrangement for equal drawing of a drawer to prevent jamming when an unequal force is used to push or pull the drawer. A rack and pinion arrangement is provided on each side of the drawer and the pinions on each side are joined by a shaft such that they rotate simultaneously. JP H03 293177 A discloses a rack and pinion arrangement for ensuring paper alignment in a printer. A pinion comprises a central flange arranged such that teeth on one side of the flange engage with two racks in a mutually opposed relationship, and a detent wheel on the other side of the flange.

### Brief Description of the Drawings

Figure 1 is a block diagram illustrating one example of a printing system.
Figure 2 is a schematic illustration of one example of a service station assembly for a printing system.
Figure 3 is a bottom perspective view illustrating one example of a portion of a service station assembly for a printing system including one example of a rack-and-pinion gear arrangement.
Figure 4 is a bottom perspective view illustrating one example of the rack of Figure 3.
Figures 5A, 5B, 5C and 50 illustrate one example of the pinion of Figure 3.
Figure 6 is an enlarged view of a portion of the rack-and-pinion gear arrangement within the dashed area of the example of Figure 3.
Figure 7 illustrates one example of engagement of the rack-and-pinion gear arrangement of Figure 3.
Figure 8 illustrates one example of further engagement of the rack-and-pinion gear arrangement of Figure 3.
Figure 9 illustrates one example of blocked engagement of the rack-and-pinion gear arrangement of Figure 3.
Figure 10 is a flow diagram illustrating one example of a method of engagement of a rack-and-pinion gear arrangement for a printing system.

### Detailed Description

In the following detailed description, reference is made to the accompanying drawings which form a part hereof, and in which is shown by way of illustration specific examples in which the disclosure may be practiced. It is to be understood that other examples may be utilized and structural or logical changes may be made without departing from the scope of the present disclosure. The disclosure provides a gear arrangement for a printer as defined in claim 1 and a method for gear engagement in a printer as defined in claim 8.

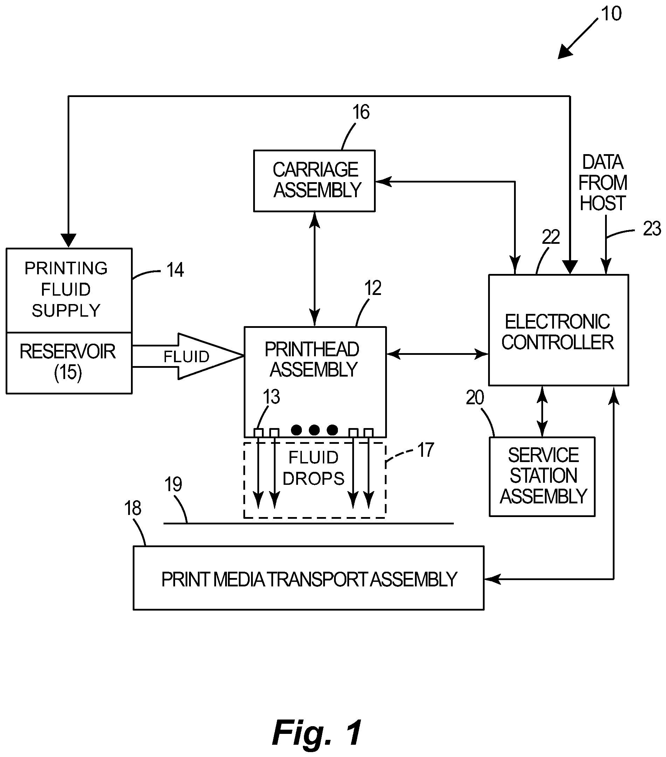

Figure 1 illustrates one example of a printing system 10. In one example, printing system 10 is an inkjet printing system and includes a fluid ejection assembly, such as printhead assembly 12, and a fluid supply assembly, such as printing fluid supply 14. In the illustrated example, printing system 10 also includes a carriage assembly 16, a print media transport assembly 18, a service station assembly 20, and an electronic controller 22.

Printhead assembly 12 includes at least one printhead or fluid ejection device which ejects drops of printing fluid or other fluid through a plurality of orifices or nozzles 13. In one example, the drops are directed toward a medium, such as print media 19, so as to print onto print media 19. Print media 19 includes, for example, any type of suitable sheet material, such as paper, card stock, transparencies, Mylar, fabric, and the like, packaging material, or other printable material. In one example, nozzles 13 are arranged in at least one column or array such that properly sequenced ejection of printing fluid from nozzles 13 causes characters, symbols, and/or other graphics or images to be printed upon print media 19 as printhead assembly 12 and print media 19 are moved relative to each other.

Printing fluid supply 14 supplies printing fluid to printhead assembly 12 and includes a reservoir 15 for storing printing fluid. As such, in one example, printing fluid flows from reservoir 15 to printhead assembly 12. In one example, printhead assembly 12 and printing fluid supply 14 are housed together in an inkjet or fluid-jet print cartridge or pen. In another example, printing fluid supply 14 is separate from printhead assembly 12 and supplies printing fluid to printhead assembly 12 through an interface connection, such as a supply tube.

Carriage assembly 16 positions printhead assembly 12 relative to print media transport assembly 18 and print media transport assembly 18 positions print media 19 relative to printhead assembly 12. Thus, a print zone 17 is defined adjacent to nozzles 13 in an area between printhead assembly 12 and print media 19. In one example, printhead assembly 12 is a scanning type printhead assembly such that carriage assembly 16 moves printhead assembly 12 relative to print media transport assembly 18. In another example, printhead assembly 12 is a non-scanning type printhead assembly such that carriage assembly 16 fixes printhead assembly 12 at a prescribed position relative to print media transport assembly 18. Print media transport assembly 18 may include, for example, a variety of guides, rollers, wheels, etc. for the handling and/or routing of print media 19 through printing system 10, including transporting, guiding, and/or directing print media 19 to print zone 17, and/or transporting, guiding, and/or directing print media 19 away from print zone 17.

Service station assembly 20 provides for spitting, wiping, capping, and/or priming of printhead assembly 12 in order to maintain a functionality of printhead assembly 12 and, more specifically, nozzles 13. For example, service station assembly 20 may include a rubber blade or wiper which is periodically passed over printhead assembly 12 to wipe and clean nozzles 13 of excess printing fluid. In addition, service station assembly 20 may include a cap which covers printhead assembly 12 to protect nozzles 13 from drying out during periods of non-use. In addition, service station assembly 20 may include a spittoon into which printhead assembly 12 ejects printing fluid to insure that reservoir 15 maintains an appropriate level of pressure and fluidity, and insure that nozzles 13 do not clog or weep. Functions of service station assembly 20 may include relative motion between service station assembly 20 and printhead assembly 12.

Electronic controller 22 communicates with printhead assembly 12, carriage assembly 16, print media transport assembly 18, and service station assembly 20. Thus, in one example, when printhead assembly 12 is mounted in carriage assembly 16, electronic controller 22 and printhead assembly 12 communicate via carriage assembly 16. Electronic controller 22 also communicates with printing fluid supply 14 such that, in one implementation, a new (or used) printing fluid supply may be detected, and a level of printing fluid in the printing fluid supply may be detected.

Electronic controller 22 receives data 23 from a host system, such as a computer, and may include memory for temporarily storing data 23. Data 23 may be sent to printing system 10 along an electronic, infrared, optical or other information transfer path. Data 23 represents, for example, a document and/or file to be printed. As such, data 23 forms a print job for printing system 10 and includes print job commands and/or command parameters.

In one example, electronic controller 22 provides control of printhead assembly 12 including timing control for ejection of printing fluid drops from nozzles 13. As such, electronic controller 22 defines a pattern of ejected printing fluid drops which form characters, symbols, and/or other graphics or images on print media 19. Timing control and, therefore, the pattern of ejected printing fluid drops, is determined by the print job commands and/or command parameters. In one example, logic and drive circuitry forming a portion of electronic controller 22 is located on printhead assembly 12. In another example, logic and drive circuitry forming a portion of electronic controller 22 is located off printhead assembly 12.

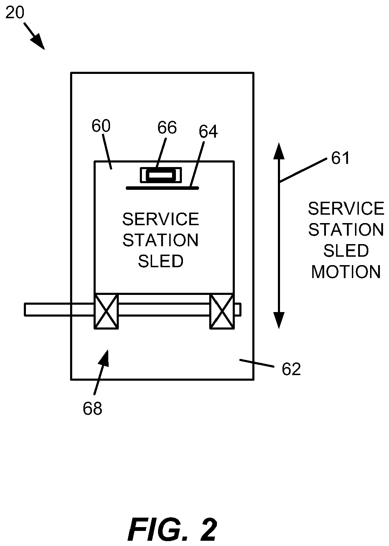

In one example, as schematically illustrated in Figure 2, service station assembly 20 includes a service station pallet or sled 60 and a frame or chassis 62. In one implementation, service station sled 60 supports at least one wiper 64 which passes over printhead assembly 12 to clean and/or remove debris or fluid from a face of printhead assembly 12. In one implementation, service station sled 60 supports at least one cap 66 which covers printhead assembly 12 when not in use to prevent printhead assembly 12 from drying out. Wiping and capping of printhead assembly 12 can utilize motion of service station assembly 20 and, more specifically, motion of service station sled 60 relative to printhead assembly 12. As such, in one implementation, service station assembly 20 includes a gear arrangement 68 for motion of service station sled 60 such that service station sled 60 is mounted in chassis 62 for movement, as indicated by bi-directional arrow 61.

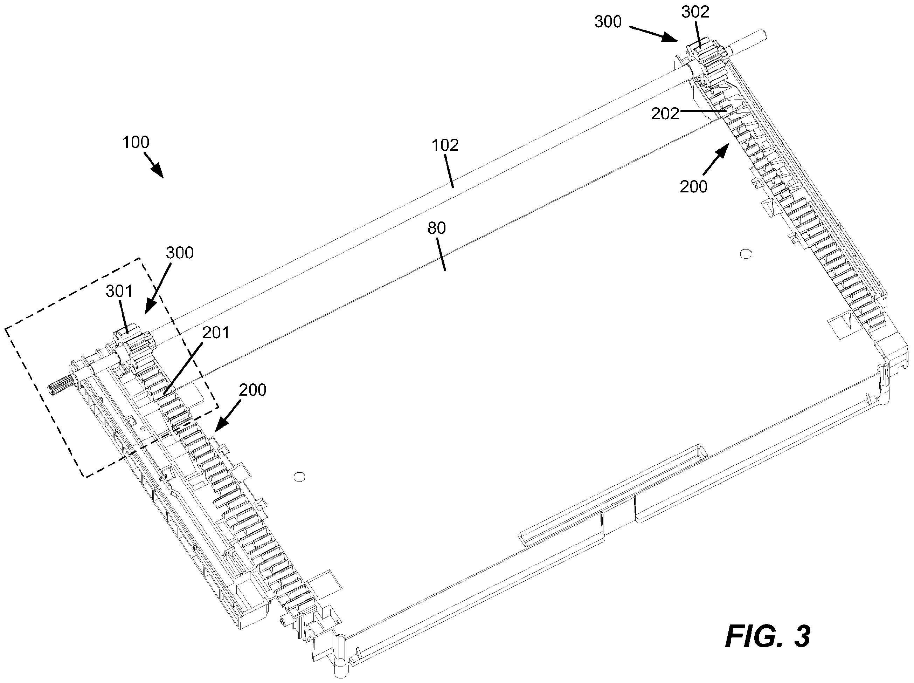

Figure 3 is a bottom perspective view illustrating one example of a portion of a service station assembly, such as service station assembly 20, including a service station sled 80, as an example of service station sled 60, and a rack-and-pinion gear arrangement 100, as an example of gear arrangement 68, for movement or motion of sled 80 in servicing of printhead assembly 12, as described above.

In one example, gear arrangement 100 includes a rack 200 supported by or formed with sled 80, and a pinion 300 to engage rack 200. In one implementation, gear arrangement 100 includes two racks 201 and 202, one positioned toward each side of sled 80, and two pinions 301 and 302, each to engage a corresponding one of the racks 201 and 202. In one example, a drive shaft 102 extends between pinions 301 and 302 to rotate pinions 301 and 302 and move sled 80.

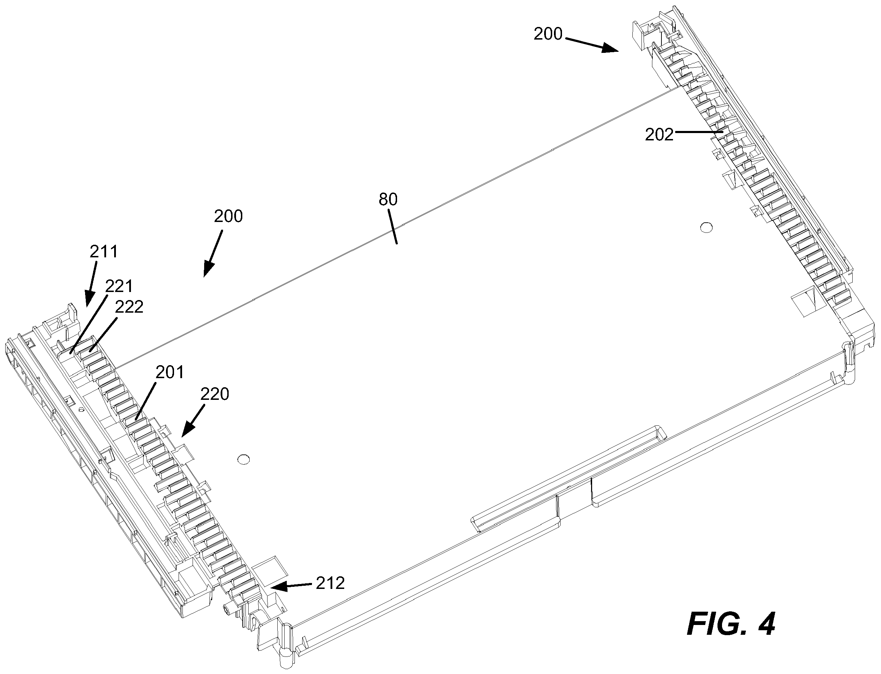

Figure 4 is a bottom perspective view illustrating one example of rack 200 as supported by or formed with sled 80. In one example, rack 200, including rack 201 and rack 202, has a first end 211 and a second opposite end 212. In one implementation, first end 211 represents an end to be engaged with pinion 300 when sled 80 is inserted or installed in printing system 10. In one example, rack 200 includes a series of teeth 220 with a first tooth 221 being an initial of or first tooth in the series and a second tooth 222 being a next or second tooth in the series. In one implementation, first tooth 221 forms an indexing tooth for initial engagement between rack 200 and pinion 300, as described below.

In one example, a width of first tooth 221 is greater than a width of second tooth 222. As such, first tooth 221 and second tooth 222 form a series or sequence of alternating width teeth including, more specifically, a wide tooth followed by a narrow tooth. In some examples, rack 200 has one series or more than one series of alternating width teeth.

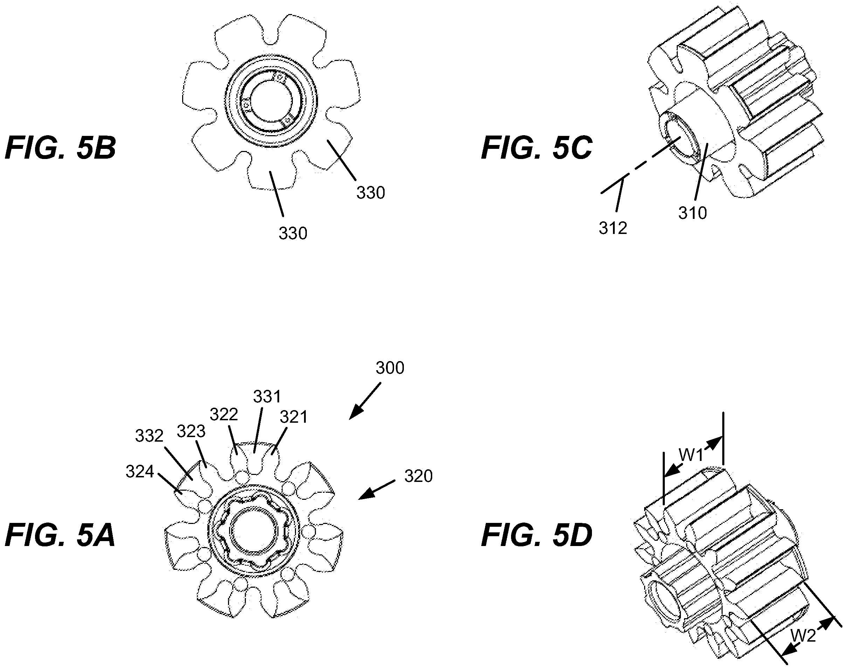

Figures 5A, 5B, 5C and 5D illustrate one example of pinion 300. In one example, pinion 300, including pinion 301 and pinion 302, includes a central hub 310 with an axis of rotation 312, and a plurality of teeth 320 extending from hub 310. In one example, a web 330 extends between or joins adjacent teeth 320 including, more specifically, a pair of adjacent teeth 320. Web 330 includes or forms a connecting element between a pair of adjacent teeth 320 and, as described below, partially blocks or fills a space between the pair of adjacent teeth 320 so as to limit or control engagement between the pair of adjacent teeth 320. More specifically, web 330 limits the width of a tooth to be engaged with pinion 300 between the pair of adjacent teeth 320.

In one example, web 330 is formed with and extends between or joins the ends or sides of a pair of adjacent teeth 320. More specifically, in one implementation, web 330 extends between or joins the tips of a pair of adjacent teeth 320 and extends between or joins opposing faces of a pair of adjacent teeth 320. As such, web 330 partially blocks or fills a space between the pair of adjacent teeth 320 at an end or side of the pair of adjacent teeth 320.

In one example, pinion includes a plurality of webs 330, with each web 330 extended between or joining alternating pairs of adjacent teeth 320. For example, in one implementation, teeth 321 and 322 form one pair of adjacent teeth 320, and teeth 323 and 324 form another pair of adjacent teeth 320. As such, web 331, as one example of web 330, extends between or joins adjacent teeth 321 and 322, and web 332, as another example of web 330, extends between or joins adjacent teeth 323 and 324. Web 330, however, does not extend between or join adjacent teeth 322 and 323. Thus, inclusion of web 330 alternates between pairs of adjacent teeth 320.

In one example, teeth 320 each have a full tooth width W1 such that web 330 is provided at an end of width W1. As such, web 330 partially blocks or fills a space between the respective pair of adjacent teeth 320, thereby resulting in a reduced face width W2 of opposing faces of the respective pair of adjacent teeth 320. As such, in one implementation, each tooth of the pair of adjacent teeth 320 includes a first face having a width corresponding to the full tooth width W1, and a second face having reduced face width W2. Thus, as described below, teeth 220 of rack 200 which have a width less than reduced face width W2 may engage the space between the pair of adjacent teeth 320 joined by web 330. For example, only teeth 220 of rack 200 which have a width less than reduced face width W2 may engage the space between teeth 321 and 322, and the space between teeth 323 and 324.

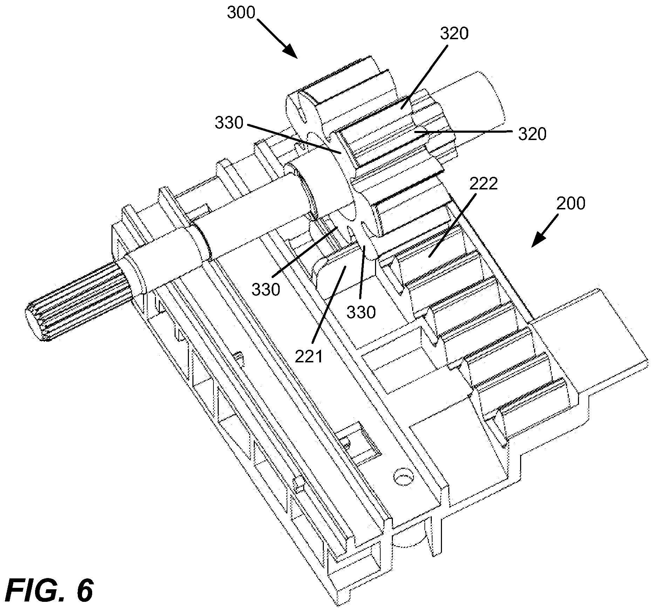

Figure 6 is an enlarged view of a portion of gear arrangement 100 within the dashed area of the example of Figure 3, including one example of engagement of rack 200 and pinion 300. As illustrated in the example of Figure 6, rack 200 is engaged with pinion 300 such that first tooth 221 engages pinion 300 between one tooth of a first pair of adjacent teeth 320 having web 330 therebetween and one tooth of a second pair of adjacent teeth 320 having web 330 therebetween. Thus, first tooth 221 of rack 200 engages pinion 300 between alternating pairs of adjacent teeth 320 which have web 330 therebetween. More specifically, first tooth 221 of rack 200 engages pinion 300 between teeth 320 which are not joined by web 330.

As illustrated in the example of Figure 6, and as described above, a width of first tooth 221 of rack 200 is greater than a width of second tooth 222 of rack 200. More specifically, first tooth 221 of rack 200 has a width greater than reduced face width W2 (Figure 5D) of pinion 300, and second tooth 222 of rack 200 has a width less than reduced face width W2 (Figure 5D) of pinion 300. As such, first tooth 221 can only engage pinion 300 between teeth 320 which are not joined by web 330, and second tooth 222 can engage pinion 300 between teeth 320 which are joined by web 330. Thus, between teeth 320 which are not joined by web 330, pinion can be engaged by teeth 220 of rack 200 of any width and, between teeth 320 which are joined by web 330, pinion 300 can be engaged only by teeth 220 of rack 200 which have a width less than reduced face width W2 (Figure 5D). This arrangement helps provide for aligned or correct engagement between rack 200 and pinion 300, as described below.

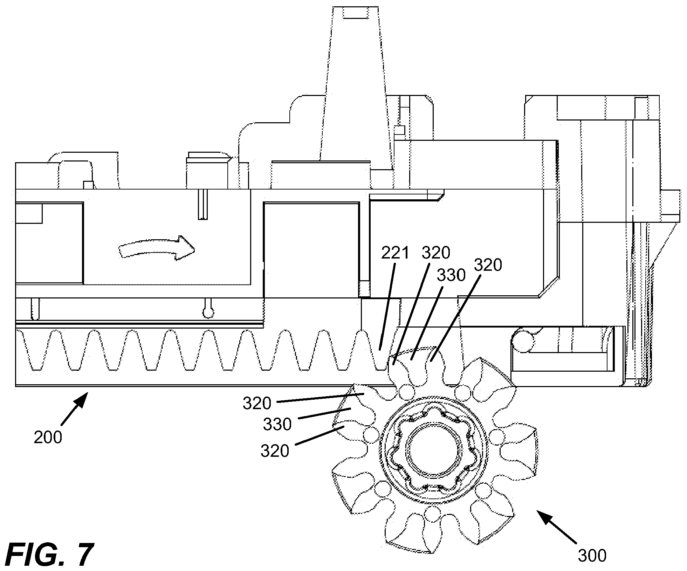

Figure 7 illustrates one example of engagement of gear arrangement 100, including engagement between rack 200 and pinion 300. As first tooth 221 of rack 200 has a width greater than reduced face width W2 (Figure 5D), rack 200 is engaged with pinion 300 such that first tooth 221 of rack 200 engages pinion 300 between alternating pairs of adjacent teeth 320 which have web 330 extending therebetween. More specifically, first tooth 221 engages pinion 300 between one tooth of a first pair of adjacent teeth 320 having web 330 therebetween and one tooth of a second pair of adjacent teeth 320 having web 330 therebetween. Thus, first tooth 221 of rack 200 engages pinion 300 between teeth 320 which are not joined by web 330.

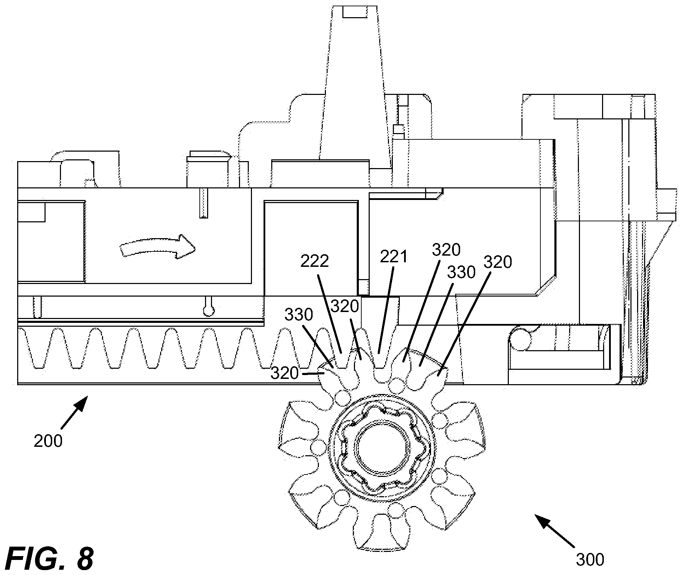

Figure 8 illustrates one example of further engagement of gear arrangement 100, including further engagement between rack 200 and pinion 300. As second tooth 222 of rack 200 has a width less than reduced face width W2 (Figure 5D), rack 200 is further engaged with pinion 300 such that first tooth 221 of rack 200 engages pinion 300 between teeth 320 which are not joined by web 330, and second tooth 222 of rack 200 engages pinion 300 between teeth 320 which are joined by web 330. Thus, Figures 7 and 8 illustrate one example of proper or correct engagement between rack 200 and pinion 300.

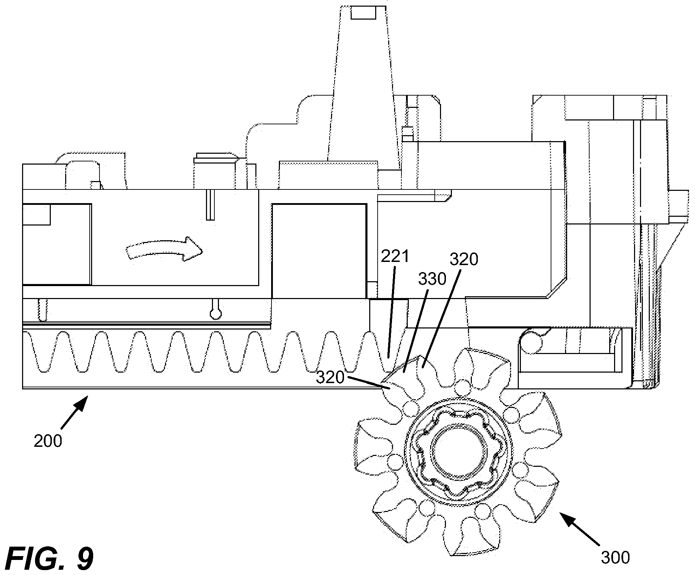

Figure 9 illustrates one example of blocked engagement of gear arrangement 100, including blocked engagement between rack 200 and pinion 300. More specifically, as first tooth 221 of rack 200 has a width greater than reduced face width W2 (Figure 5D), first tooth 221 hits or contacts web 330 which joins adjacent teeth 320. As such, engagement of first tooth 221 between adjacent teeth 320 which are joined by web 330 is prevented such that rack 200 is blocked from engagement with pinion 300. Thus, Figure 9 illustrates one example of blocked engagement between rack 200 and pinion 300, so as to avoid or prevent misaligned or incorrect engagement between rack 200 and pinion 300.

Furthermore, as first tooth 221 hits or contacts web 330, pinion 300 rotates such that tooth 221 engages pinion 300 between teeth 320 which are not joined by web 330, and second tooth 222 of rack 200 engages pinion 300 between teeth 320 which are joined by web 330, as illustrated, for example, in Figures 7 and 8. Thus, proper or correct engagement between rack 200 and pinion 300 is achieved.

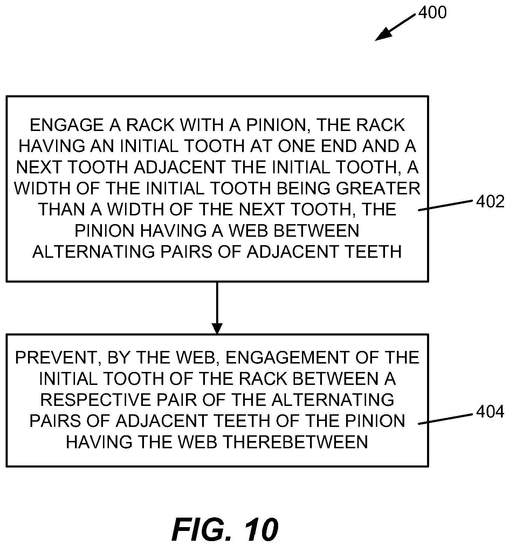

Figure 10 is a flow diagram illustrating one example of a method 400 of gear engagement, such as engagement of gear arrangement 100, in a printer, such as printing system 10.

With method 400, at 402, a rack, such as rack 200, as illustrated in the example of Figure 4, is engaged with a pinion, such as pinion 300, as illustrated in the example of Figures 5A, 5B, 5C and 5D. In one example, the rack has an initial tooth at one end, such as first tooth 221 at first end 211, as illustrated in the example of Figure 4, and a next tooth adjacent the initial tooth, such as second tooth 222, as illustrated in the example of Figure 4. In one example, a width of the initial tooth is greater than a width of the next tooth, as illustrated, for example, in Figures 4 and 6. In one example, the pinion, such as pinion 300, as illustrated in the example of Figures 5A, 5B, 5C and 5D, has a web, such as web 330, as illustrated in the example of Figures 5A, 5B, 5C and 5D, between alternating pairs of adjacent teeth. For example, between adjacent teeth 321 and 322, and between adjacent teeth 323 and 324, as illustrated in the example of Figures 5A, 5B, 5C and 5D.

As such, at 404, in engaging the rack with the pinion, the web prevents engagement of the initial tooth of the rack between a respective pair of the alternating pairs of adjacent teeth of the pinion having the web therebetween. For example, web 330 prevents engagement of first tooth 221 between adjacent teeth 320, as illustrated in the example of Figure 9.

With a gear arrangement as disclosed herein, misaligned or incorrect engagement between the rack and the pinion may be prevented. More specifically, as the web between the adjacent teeth of the pinion reduces the face width of the opposing faces of the adjacent teeth and the first tooth of the rack has a width greater than the reduced face width, the first tooth of the rack is prevented from engagement between the adjacent teeth of the pinion which have the web therebetween when the rack is engaged with the pinion. As the web extends between or joins two adjacent teeth of the pinion, misalignment of the rack and the pinion by a single tooth, which may be difficult to detect, may be avoided, for example, when the service station sled is inserted or installed. Furthermore, as the first tooth of the rack is permitted to engage the pinion between adjacent teeth of the pinion which are not joined by the web, proper or correct engagement between the rack and the pinion may be achieved. Thus, proper or correct alignment or indexing of the rack to the pinion may be established, for example, when the service station sled is inserted or installed.

## Claims

1. A gear arrangement (100) for a printer, comprising:
a rack (200) having a first end (211) and a series (220) of alternating first and second teeth (221, 222) extending from the first end (211), a width of each of the first teeth (221) being greater than a width of each of the second teeth (222); and
a pinion (300) having a first tooth (321), a second tooth (322) adjacent the first tooth (321), and a web (331) between the first tooth (321) and the second tooth (322),
the web (331) being arranged to prevent engagement of each of the first teeth (221) of the rack (200) between the first tooth (321) and the second tooth (322) of the pinion (300) and to permit engagement of each of the second teeth (222) of the rack (200) between the first tooth (321) and the second tooth (322) of the pinion (300).

2. The gear arrangement (100) of claim 1, further comprising:
the pinion (300) having a third tooth (323) adjacent the second tooth (322),
each of the first teeth (221) of the rack (200) to engage the pinion (300) between the second tooth (322) and the third tooth (323) of the pinion (300).

3. The gear arrangement (100) of claim 2, further comprising:
the pinion (300) having a fourth tooth (324) adjacent the third tooth (323) and an additional web (332) between the third tooth (324) and the fourth tooth (323),
the additional web (332) of the pinion (300) to permit engagement of each of the second teeth (222) of the rack (200) between the third tooth (323) and the fourth tooth (324) of the pinion (300).

4. The gear arrangement (100) of claim 1, wherein the web (331) is provided at a side of the first tooth (321) and the second tooth (322) of the pinion (300).

5. The gear arrangement (100) of claim 1, wherein the web (331) reduces a face width of opposing faces of the first tooth (321) and the second tooth (322) of the pinion (300).

6. The gear arrangement (100) of any one of claim 2 or claim 3, wherein the web (331) is configured to engage an initial first tooth (221) of the series (220) of alternating first and second teeth (221, 222) of the rack (200) between the second tooth (322) and the third tooth (323) of the pinion (300), and to engage an initial second tooth (222) adjacent to the initial first tooth (221) between the first tooth (321) and the second tooth (322) of the pinion (300), wherein the initial first tooth (221) is located at the first end (211) of the rack (200).

7. The gear arrangement (100) of claim 6, wherein the initial first tooth (221) has a greater width than each of the subsequent first teeth (221) of the series (220) of alternating first and second teeth (221, 222) of the rack (200).

8. A method (400) of gear engagement in a printer, comprising:
engaging (402) a rack (200) with a pinion (300), the rack (200) having a first end (211) and a series (220) of alternating first and second teeth (221, 222) extending from the first end (211), a width of each of the first teeth (221) being greater than a width of each of the second teeth (222), the pinion (300) having a web (331) between alternating pairs of adjacent teeth (321, 322),
engaging the rack (200) with the pinion (300) including preventing (404), by the web (331), engagement of each of the first teeth (221) of the rack (200) between a respective pair of the alternating pairs of adjacent teeth (321, 322) of the pinion (300) having the web (331) therebetween.

9. The method (400) of claim 8, further comprising:
engaging the rack (200) with the pinion (300) further including permitting engagement of each of the first teeth (221) of the rack (200) between one tooth (322) of a first pair of the alternating pairs of adjacent teeth (321, 322) of the pinion (300) having the web (331) therebetween and one tooth (323) of a second pair of the alternating pairs of adjacent teeth (323, 324) of the pinion (300) having the web (331) therebetween.

10. The method (400) of claim 8, further comprising:
engaging the rack (200) with the pinion (300) further including permitting, by the web (331), engagement of each of the second teeth (222) of the rack (200) between a respective pair of the alternating pairs of adjacent teeth (321, 322) of the pinion (300) having the web (331) therebetween.

11. The method (400) of claim 8, wherein the web (331) between alternating pairs of adjacent teeth (321, 322) is provided at an end of a width of the teeth 321, 322) of the pinion (300).

12. The method (400) of claim 8, wherein the web (331) between alternating pairs of adjacent teeth (321, 322) reduces a face width of opposing faces of a respective pair of the alternating pairs of adjacent teeth (321, 322) of the pinion (300) having the web (331) therebetween.

## Patentansprüche

1. Zahnradanordnung (100) für einen Drucker, umfassend:
eine Zahnstange (200) mit einem ersten Ende (211) und einer Reihe (220) von abwechselnd ersten und zweiten Zähnen (221, 222), die sich von dem ersten Ende (211) aus erstrecken, wobei eine Breite jedes der ersten Zähne (221) größer als eine Breite jedes der zweiten Zähne (222) ist; und
ein Ritzel (300) mit einem ersten Zahn (321), einem zweiten Zahn (322) benachbart zum ersten Zahn (321) und einem Steg (331) zwischen dem ersten Zahn (321) und dem zweiten Zahn (322),
wobei der Steg (331) so angeordnet ist, dass er das Ineingriffbringen jedes der ersten Zähne (221) der Zahnstange (200) zwischen dem ersten Zahn (321) und dem zweiten Zahn (322) des Ritzels (300) verhindert und das Ineingriffbringen jedes der zweiten Zähne (222) der Zahnstange (200) zwischen dem ersten Zahn (321) und dem zweiten Zahn (322) des Ritzels (300) erlaubt.

2. Zahnradanordnung (100) nach Anspruch 1, ferner umfassend:
das Ritzel (300), das einen dritten Zahn (323) benachbart zum zweiten Zahn (322) aufweist,
wobei jeder der ersten Zähne (221) der Zahnstange (200) das Ritzel (300) zwischen dem zweiten Zahn (322) und dem dritten Zahn (323) des Ritzels (300) in Eingriff bringt.

3. Zahnradanordnung (100) nach Anspruch 2, ferner umfassend:
das Ritzel (300), das einen vierten Zahn (324) benachbart zum dritten Zahn (323) und einen zusätzlichen Steg (332) zwischen dem dritten Zahn (324) und dem vierten Zahn (323) aufweist,
wobei der zusätzliche Steg (332) des Ritzels (300) das Ineingriffbringen jedes der zweiten Zähne (222) der Zahnstange (200) zwischen dem dritten Zahn (323) und dem vierten Zahn (324) des Ritzels (300) erlaubt.

4. Zahnradanordnung (100) nach Anspruch 1, wobei der Steg (331) an einer Seite des ersten Zahns (321) und des zweiten Zahns (322) des Ritzels (300) vorgesehen ist.

5. Zahnradanordnung (100) nach Anspruch 1, wobei der Steg (331) eine Flächenbreite von gegenüberliegenden Flächen des ersten Zahns (321) und des zweiten Zahns (322) des Ritzels (300) verringert.

6. Zahnradanordnung (100) nach einem der Ansprüche 2 oder 3, wobei der Steg (331) für Folgendes konfiguriert ist: Ineingriffbringen eines anfänglichen ersten Zahns (221) der Reihe (220) von abwechselnd ersten und zweiten Zähnen (221, 222) der Zahnstange (200) zwischen dem zweiten Zahn (322) und dem dritten Zahn (323) des Ritzels (300) und Ineingriffbringen eines anfänglichen zweiten Zahns (222) benachbart zum anfänglichen ersten Zahn (221) zwischen dem ersten Zahn (321) und dem zweiten Zahn (322) des Ritzels (300), wobei sich der anfängliche erste Zahn (221) am ersten Ende (211) der Zahnstange (200) befindet.

7. Zahnradanordnung (100) nach Anspruch 6, wobei der anfängliche erste Zahn (221) eine größere Breite aufweist als jeder der nachfolgenden ersten Zähne (221) der Reihe (220) von abwechselnd ersten und zweiten Zähnen (221, 222) der Zahnstange (200).

8. Verfahren (400) zum Ineingriffbringen von Zahnrädern in einem Drucker, Folgendes umfassend:
Ineingriffbringen (402) einer Zahnstange (200) mit einem Ritzel (300), wobei die Zahnstange (200) ein erstes Ende (211) und eine Reihe (220) von abwechselnd ersten und zweiten Zähnen (221, 222) aufweist, die sich von dem ersten Ende (211) aus erstrecken, wobei eine Breite jedes der ersten Zähne (221) größer ist als eine Breite jedes der zweiten Zähne (222), wobei das Ritzel (300) einen Steg (331) zwischen abwechselnden Paaren benachbarter Zähne (321, 322) aufweist,
Ineingriffbringen der Zahnstange (200) mit dem Ritzel (300), einschließlich des Verhinderns (404), durch den Steg (331), des Ineingriffbringens jedes der ersten Zähne (221) der Zahnstange (200) zwischen einem jeweiligen Paar der abwechselnden Paare benachbarter Zähne (321, 322) des Ritzels (300), das den dazwischenliegenden Steg (331) aufweist.

9. Verfahren (400) nach Anspruch 8, weiter Folgendes umfassend:
Ineingriffbringen der Zahnstange (200) mit dem Ritzel (300), einschließlich des Erlaubens des Ineingriffbringens jedes der ersten Zähne (221) der Zahnstange (200) zwischen einem Zahn (322) eines ersten Paares der abwechselnden Paare benachbarter Zähne (321, 322) des Ritzels (300), das den dazwischenliegenden Steg (331) aufweist, und einem Zahn (323) eines zweiten Paares der abwechselnden Paare benachbarter Zähne (323, 324) des Ritzels (300), das den dazwischenliegenden Steg (331) aufweist.

10. Verfahren (400) nach Anspruch 8, ferner Folgendes umfassend:
Ineingriffbringen der Zahnstange (200) mit dem Ritzel (300), ferner umfassend das Erlauben, durch den Steg (331), des Ineingriffbringens jedes der zweiten Zähne (222) der Zahnstange (200) zwischen einem jeweiligen Paar der abwechselnden Paare benachbarter Zähne (321, 322) des Ritzels (300), das den dazwischenliegenden Steg (331) aufweist.

11. Verfahren (400) nach Anspruch 8, wobei der Steg (331) zwischen abwechselnden Paaren benachbarter Zähne (321, 322) an einem Ende einer Breite der Zähne 321, 322) des Ritzels (300) vorgesehen ist.

12. Verfahren (400) nach Anspruch 8, wobei der Steg (331) zwischen abwechselnden Paaren von benachbarten Zähnen (321, 322) eine Flächenbreite von gegenüberliegenden Flächen eines jeweiligen Paares der abwechselnden Paare von benachbarten Zähnen (321, 322) des Ritzels (300), das den dazwischenliegenden Steg (331) aufweist, verringert.

## Revendications

1. Agencement d'engrenage (100) destiné à une imprimante, comprenant :
une crémaillère (200) ayant une première extrémité (211) et une série (220) de premières et secondes dents alternées (221, 222) s'étendant depuis la première extrémité (211), une largeur de chacune des premières dents (221) étant supérieure à une largeur de chacune des secondes dents (222) ; et
un pignon (300) ayant une première dent (321), une deuxième dent (322) adjacente à la première dent (321) et une âme (331) entre la première dent (321) et la deuxième dent (322), l'âme (331) étant conçue pour empêcher l'engrènement de chacune des premières dents (221) de la crémaillère (200) entre la première dent (321) et la deuxième dent (322) du pignon (300) et pour permettre l'engrènement de chacune des secondes dents (222) de la crémaillère (200) entre la première dent (321) et la deuxième dent (322) du pignon (300).

2. Agencement d'engrenage (100) selon la revendication 1, comprenant en outre :
le fait que le pignon (300) ait une troisième dent (323) adjacente à la deuxième dent (322), chacune des premières dents (221) de la crémaillère (200) étant destinée à s'engrener avec le pignon (300) entre la deuxième dent (322) et la troisième dent (323) du pignon (300).

3. Agencement d'engrenage (100) selon la revendication 2, comprenant en outre :
le fait que le pignon (300) ait une quatrième dent (324) adjacente à la troisième dent (323) et une âme supplémentaire (332) entre la troisième dent (324) et la quatrième dent (323), l'âme supplémentaire (332) du pignon (300) étant destinée à permettre l'engrènement de chacune des secondes dents (222) de la crémaillère (200) entre la troisième dent (323) et la quatrième dent (324) du pignon (300).

4. Agencement d'engrenage (100) selon la revendication 1, dans lequel l'âme (331) est prévue sur un côté de la première dent (321) et de la deuxième dent (322) du pignon (300).

5. Agencement d'engrenage (100) selon la revendication 1, dans lequel l'âme (331) réduit une largeur de face de faces opposées de la première dent (321) et de la deuxième dent (322) du pignon (300).

6. Agencement d'engrenage (100) selon l'une quelconque des revendications 2 ou 3, dans lequel l'âme (331) est conçue pour s'engrener avec une première dent (221) initiale de la série (220) constituée des premières et secondes dents (221, 222) alternées de la crémaillère (200) entre la deuxième dent (322) et la troisième dent (323) du pignon (300), et pour s'engrener avec une seconde dent (222) initiale adjacente à la première dent (221) initiale entre la première dent (321) et la deuxième dent (322) du pignon (300), la première dent (221) initiale étant située à la première extrémité (211) de la crémaillère (200).

7. Agencement d'engrenage (100) selon la revendication 6, dans lequel la première dent (221) initiale a une largeur plus grande que celle de chacune des premières dents (221) suivantes de la série (220) constituée des premières et secondes dents (221, 222) alternées de la crémaillère (200).

8. Procédé (400) d'engrènement d'engrenage dans une imprimante, comprenant :
l'engrènement (402) d'une crémaillère (200) avec un pignon (300), la crémaillère (200) ayant une première extrémité (211) et une série (220) de premières et secondes dents (221, 222) alternées s'étendant depuis la première extrémité (211), une largeur de chacune des premières dents (221) étant supérieure à une largeur de chacune des secondes dents (222), le pignon (300) présentant une âme (331) entre des paires alternées de dents adjacentes (321, 322), l'engrènement de la crémaillère (200) avec le pignon (300) comprenant l'empêchement (404), par l'âme (331), de l'engrènement de chacune des premières dents (221) de la crémaillère (200) entre une paire respective des paires alternées de dents adjacentes (321, 322) du pignon (300) comportant l'âme (331) entre elles.

9. Procédé (400) selon la revendication 8, comprenant en outre :
l'engrènement de la crémaillère (200) avec le pignon (300), l'engrènement de la crémaillère avec le pignon comprenant en outre la possibilité d'engrènement de chacune des premières dents (221) de la crémaillère (200) entre une dent (322) d'une première paire des paires alternées de dents adjacentes (321, 322) du pignon (300) présentant l'âme (331) entre elles et une dent (323) d'une seconde paire des paires alternées de dents adjacentes (323, 324) du pignon (300) comportant l'âme (331) entre elles.

10. Procédé (400) selon la revendication 8, comprenant en outre :
l'engrènement de la crémaillère (200) avec le pignon (300), l'engrènement de la crémaillère avec le pignon comprenant en outre la possibilité, par l'âme (331), d'engrènement de chacune des secondes dents (222) de la crémaillère (200) entre une paire respective des paires alternées de dents adjacentes (321, 322) du pignon (300) comportant l'âme (331) entre elles.

11. Procédé (400) selon la revendication 8, dans lequel l'âme (331) située entre des paires alternées de dents adjacentes (321, 322) se trouve à une extrémité d'une largeur des dents (321, 322) du pignon (300).

12. Procédé (400) selon la revendication 8, dans lequel l'âme (331) située entre des paires alternées de dents adjacentes (321, 322) réduit une largeur de face de faces opposées d'une paire respective des paires alternées de dents adjacentes (321, 322) du pignon (300) comportant l'âme (331) entre elles.
